# EUROPÄISCHE PATENTSCHRIFT

(11) **EP 1 837 237 B1**
(45) Veröffentlichungstag und Bekanntmachung des Hinweises auf die Patenterteilung: **02.12.2009**
(21) Anmeldenummer: 07001717.3
(22) Anmeldetag: 26.01.2007
(51) Int. Cl.: B60R 5/00

(54) **Skisack mit veränderlicher Länge**
Ski bag with adjustable length
Sac de skis à longueur variable

(30) Priorität: 20.03.2006 DE 102006013023
(43) Veröffentlichungstag der Anmeldung: 26.09.2007
(73) Patentinhaber: BOS GmbH & Co. KG, 73760 Ostfildern (DE)
(72) Erfinder: Beer, Andrea, 51103 Köln (DE); Thoma, Waldemar, 40789 Monheim (DE)
(74) Vertreter: Rüger, Barthelt & Abel Patentanwälte

(56) Entgegenhaltungen:
- EP-A2- 1 201 502
- DE-A1- 3 447 323
- DE-C1- 19 637 029
- US-A- 5 628 543

## Beschreibung

Skier und Snowboards sind zu lang, als dass sie in dem Koffer- oder Laderaum eines Pkw oder eines Kombi-Pkw Platz finden könnten. Um sie dennoch im Fahrzeuginneren unterbringen zu können, was aus Diebstahlsgründen und zum Schutz gegen starke Verunreinigung zweckmäßig ist, wird häufig in der Rücksitzlehne des Pkw eine sogenannte Durchladeöffnung vorgesehen. Durch diese Durchladeöffnung werden die Skier oder das Snowboard zum Teil in die Fahrgastzelle hineingeschoben. Die verpackten Skier liegen damit in Fahrzeuglängsrichtung.

Um eine Verunreinigung der Sitzpolster und des sonstigen Fahrgastinnenraums durch die Skier zu vermeiden, wird in der Durchladeöffnung ein Skisack befestigt, der als Hülle für die Skier dient und so auch für jenen Teil, der im verstauten Zustand sich in der Fahrgastzelle befindet.

Dem Skisack kommt gleichzeitig eine Unfallsicherungsfunktion zu. Im Crashfall geht von den Skiern ein erhebliches Gefährdungspotential aus, wenn sie durch die bei der Verzögerung auftretenden Kräfte in der Fahrgastzelle herumgeschleudert werden. Dies zu verhindern ist eine zusätzliche Aufgabe des Skisacks.

Skier gibt es mittlerweile in durchaus unterschiedlichen Längen, so dass naturgemäß der Skisack für die größte auftretende Länge dimensioniert werden muss. Im Falle von Kurzskiern- oder Snowboards wird der Skisack nicht bis zum Sackboden vollständig ausgefüllt. Das in der Fahrgastzelle befindliche verschlossene Ende des Skisacks liegt schlaff auf der Mittelkonsole zwischen den Vordersitzen. Im Falle von Kurzskiern- oder Snowboards ist dies ausgesprochen störend, da der Skisack, obwohl nicht zur Gänze gefüllt, dennoch Raum beansprucht, den er nicht notwendigerweise beanspruchen müsste aufgrund des kürzeren Ladeguts.

Aus der EP 1 201 502 A1 ist eine Skisackanordnung bekannt, die in der Durchladeöffnung in der Rücksitzbank eines PKW anzubringen ist. Die Skisackhülle ist an ihrem offenen Ende an einem Rahmen befestigt, der in die Durchladeöffnung einsetzbar ist. Im Inneren der Skisackhülle ist eine große Schraubenfeder vorhanden, die von dem Rahmen bis zum Boden der Skisackhülle reicht. Mit Hilfe von Schlaufen ist die Schraubenfeder an der Innenseite der Sackhülle fixiert. Die Schraubenfeder hat zwei Funktionen. Sie soll in der Gebrauchsstellung das Lumen der skisackhülle offen halten, damit die Skier leicht einzuführen sind. Außerdem soll die Schraubenfeder für ein geordnetes Falten sorgen, wenn die Skisackhülle im Rahmen verstaut werden soll. Durch die Schraubenfeder soll eine geordnete Leporellofaltung erzwungen werden.

Ausgehend hiervon ist es Aufgabe der Erfindung, eine Skisackanordnung zu schaffen, die in der Länge veränderbar ist.

Diese Aufgabe wird erfindungsgemäß durch eine Skisackanordnung mit den Merkmalen des Anspruches 1 oder des Anspruches 2 gelöst.

Bei der ersten Ausführungsform ist vorgesehen, die effektive Länge des Skisacks zu verändern, indem in der Sackhülle eine in Umfangsrichtung liegende Falte gebildet wird, die mit Fixiermitteln fixiert wird. Dadurch kann der Skisack in zwei unterschiedliche effektive Längen gebracht werden. Wenn diese in Umfangsrichtung liegende Falte zur Längenverkürzung gestreckt ist, hat der Skisack seine maximale Länge und es lassen sich Langskier unterbringen. Wenn die Falte ausgebildet und durch die Fixiermittel gesichert ist, ist der Skisack entsprechend gekürzt und damit an die Länge von Kurzskiern- oder Snowboards angepasst. Zum Fixieren der in Umfangsrichtung liegenden Falte kann als Fixiermittel ein Reißverschluss verwendet werden, dessen Tragbänder in Umfangsrichtung liegen.

Der Reißverschluss kann ein unteilbarer oder ein teilbarer Reißverschluss sein. Im Falle der Verwendung eines teilbaren Reißverschlusses können mit einer Reißverschlusshälfte zwei andere an unterschiedlichen Stellen auf der Außenumfangsfläche der Sackhülle befestigte Reißverschlusshälften zusammenwirken, womit insgesamt drei unterschiedliche Skisacklängen realisierbar sind. Allerdings ist die Handhabung bei dem störrischen Material, aus dem die Hülle besteht, etwas umständlich, da beim teilbaren Reißverschluss die entsprechenden Hälften genau zusammengesteckt werden müssen, um Schwierigkeiten bei der Bedienung zu vermeiden.

Im Falle eines unteilbaren Reißverschlusses kann das entsprechende Reißverschlussende unmittelbar auf der Sackhülle befestigt bleiben. Ein einfaches Betätigen des Schiebers des Reißverschlusses genügt, um zwangsläufig die Falte herzustellen.

Vorteilhaft ist es, wenn der Skisack im Bereich der Falte, die zur Längenverkürzung erzeugt werden soll, mit Sollbiegestellen versehen ist, die ein zwangsläufiges richtiges Einfalten an der richtigen Stelle der Hauptfalte gewährleisten.

Diese Sollbiegestellen können durch eine entsprechende Zickzackfaltung der Sackhülle an der entsprechenden Stelle erzeugt werden. Die Zickzackfaltung läuft in Umfangsrichtung um die Sackhülle herum.

Eine besonders günstige Handhabung wird erreicht, wenn in der Zickzackfaltung der Sollbiegestelle das Tragband in der entsprechenden Reißverschlusshälfte eingenäht ist.

Damit der Skisack auch im Bereich der Tragbänder wasserdicht bleibt, ist vorteilhafterweise von der Innenseite her ein Dichtband aufgeklebt oder aufgeschweißt, das die Naht beziehungsweise Nähte abdichtet.

Das Material für die Sackhülle ist zweckmäßigerweise textilverstärkt, vorzugsweise gewebeverstärkt, um eine besonders gute Festigkeit zu erhalten.

Anstelle eines Reißverschlusses können auch Flächenhaftverschlüsse verwendet werden.

Im Übrigen kann der Skisack mit den ansonsten bekannten Falten versehen werden, die ein Flachlegen der Sackhülle zwecks Verstauung in dem Verankerungsrahmen ermöglichen. Es können darüber hinaus die üblichen Maßnahmen getroffen werden um die Skier zusätzlich zu sichern, beispielsweise in Gestalt von um die Sackhülle herumlaufenden Gürteln, die in dem Einsteckschloss des mittleren Sicherheitsgurtes verankert werden.

Anstatt den Skisack zwecks Verkürzung in einem Zwischenbereich der Sackhülle durch eine umlaufende Falte zu verkürzen, besteht auch die Möglichkeit, gemäß der anderen Ausführungsform den Skisack vom Sackboden her durch eine oder mehrere Falten gleichsam aufzurollen. Hierbei ist es von Vorteil zur Sicherung dieser Falte oder Falten einen Flächenhaftverschluss oder einen Duckknopfverschluss zu verwenden. Je nachdem, mit wie vielen Falten die Verkürzung erfolgen soll, befindet sich ein Glied des Fixiermittels an der prismatischen Spitze des Sackbodens und das andere Fixiermittel in dem entsprechenden Abstand auf der Außenseite der Sackhülle. Im Falle der Verwendung von zwei Falten weist das erste Teil von der prismatischen Spitze des Sackbodens einen Abstand entsprechend der Länge der Falte auf, während das zweite Fixiermittel einen Abstand von der Spitze des Sackbodens entsprechend der Länge von zwei Falten hat.

Die Verwendung von Flächenhaftverschlüssen hat den Vorteil, dass keine metallischen Teile erforderlich sind. Dafür können an dem Tentakeln tragenden Teil die Kleider hängen bleiben. Druckknöpfe dagegen sind metallisch und können korrodieren, haben aber den Vorteil, sich in der Regel nicht in unerwünschter Weise in der Kleidung zu verhaken.

Im Übrigen sind Weiterbildungen der Erfindung Gegenstand von Untertansprüchen.

In der nachfolgenden Figurenbeschreibung sind einige grundsätzliche Ausführungsbeispiele zu der Erfindung erläutert. Es versteht sich, dass die Merkmale aus den einzelnen Ausführungsbeispielen untereinander beziehungsweise miteinander kombiniert werden können. Sämtliche denkbare Kombinationsmöglichkeiten aufzuführen, würde den Umfang der Anmeldung sprengen.

In der Zeichnung zeigen:
- Fig. 1: den hinteren Teil des Fahrgastraums eines Pkws in einer teilweise aufgeschnittenen vereinfachten perspektivischen Darstellung unter Veranschauli- chung eines in der Gebrauchsstellung befindlichen Skisacks,
- Fig. 2: das Fahrzeug nach Fig 1 mit in der Gebrauchsstel- lung befindlichem Skisack,
- Fig. 3: den Skisack nach Fig. 2, in einer vergrößerten perspektivischen Darstellung und um 90° um die Längsachse gedreht,
- Fig. 4: einen Ausschnitt aus dem Skisack nach Fig. 2, in einer vergrößerten geschnittenen perspektivischen Darstellung im Bereich der in Umfangsrichtung liegenden Falte,
- Fig. 5: ein Ausführungsbeispiel eines Skisacks mit einer geänderten Anordnung des Reißverschlusses,
- Fig. 6: ein weiteres Beispiel für einen Skisack mit ver- änderlicher Länge unter Verwendung von Flächen- haftverschlüssen, in einer Darstellung ähnlich Fig. 2,
- Fig. 7: ein weiteres Ausführungsbeispiel für einen Ski- sack mit veränderlicher Länge unter Verwendung von Druckknöpfen, in einer Darstellung entspre- chend Fig. 6, und

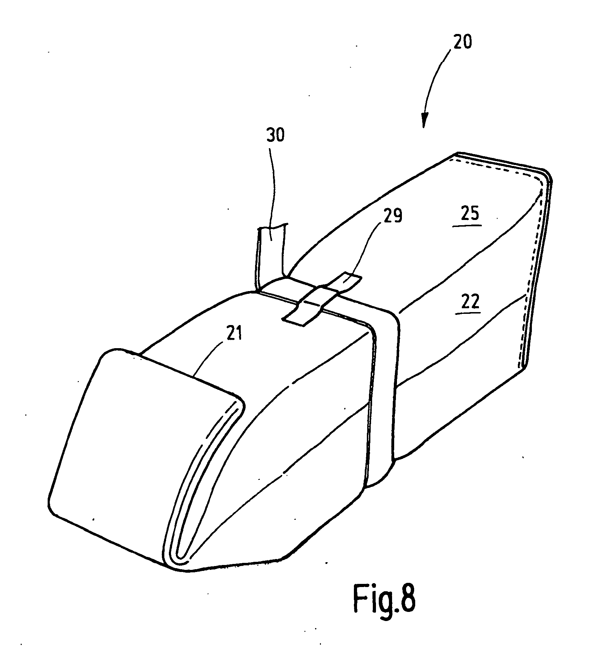

- Fig. 8: ein weiteres Ausführungsbeispiel für die Faltung des Skisacks nach den Figuren 6 und 7, in einer Darstellung entsprechend diesen Figuren.

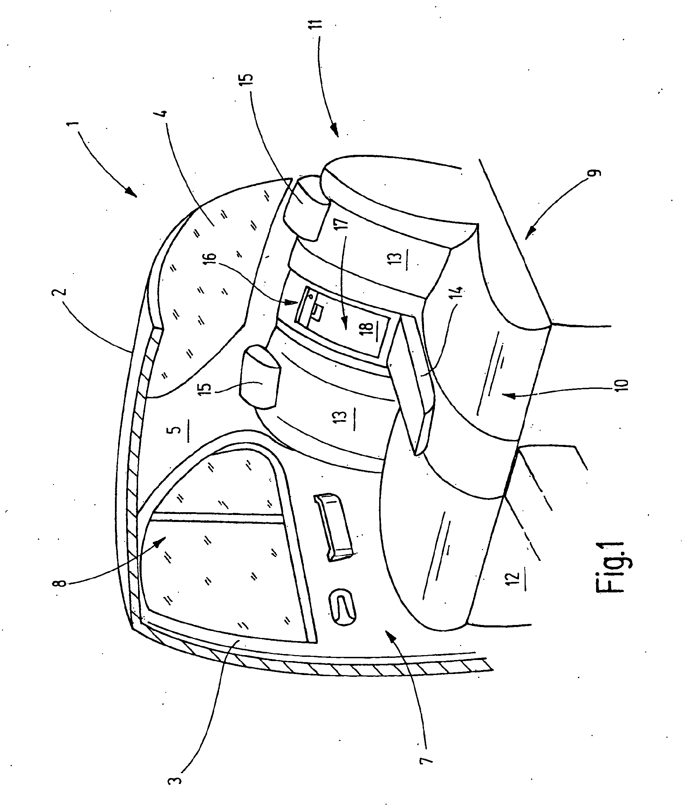

Fig. 1 stellt den aufgebrochenen abgeschnittenen Fondbereich eines Pkw dar. Die Figur veranschaulich einen Blick auf die rechte Innenseite, die zu der nicht gezeigten linken Innenseite spiegelbildlich ist. Die Darstellung ist vereinfacht. So sind beispielsweise Karosserieinnenstrukturen wie Versteifungen oder Befestigungsmittel nicht gezeigt, da ihre Darstellung fürs Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach oben zu einer nicht gezeigten Bodengruppe führt. Eine entsprechende B-Säule wäre auf der weg gebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule trägt eine nicht weiter zu erkennende Innenverkleidung.

Zwischen der B-Säule 3 und der C-Säule 5 ist eine hintere rechte Seitentür in bekannter Weise anscharniert. Die Seitentür 7 enthält ein Fenster 8.

Auf der Höhe der hinteren rechten Seitentür 7 befindet sich eine Rücksitzbank 9, zu der eine Sitzfläche 10 sowie eine Rücksitzlehne 11 gehören. Die Rücksitzfläche 10 liegt auf einer Sockelfläche 12, die zu der Bodengruppe gehört und in der Fußräume ausgebildet sind.

Die Rücksitzlehne 11 teilt sich in einem rechten und einen linken Rückenlehnenabschnitt 13, die voneinander wie gezeigt ein Stück weit beabstandet sind. In diesem Zwischenraum befindet sich eine Mittelarmlehnenabschnitt 14, der an seiner Unterkante anscharniert ist und aus der gezeigten liegenden Stellung in einer hochgeklappte Stellung überführt werden kann, in der die beiden Rückenlehnenabschnitte miteinander verbindet.

An der Oberkante des Rückenlehnenabschnitts 13 befinden sich Kopfstützen 15. In den normalerweise durch den mittigen Armlehnen 14 bedeckten Bereich befindet sich eine Fassungsanordnung 16 in einer Durchladeöffnung, in die eine Skisackbox 17 eingesetzt ist. Die Fassungsanordnung 16 ist in der Durchladeöffnung karosseriefest.

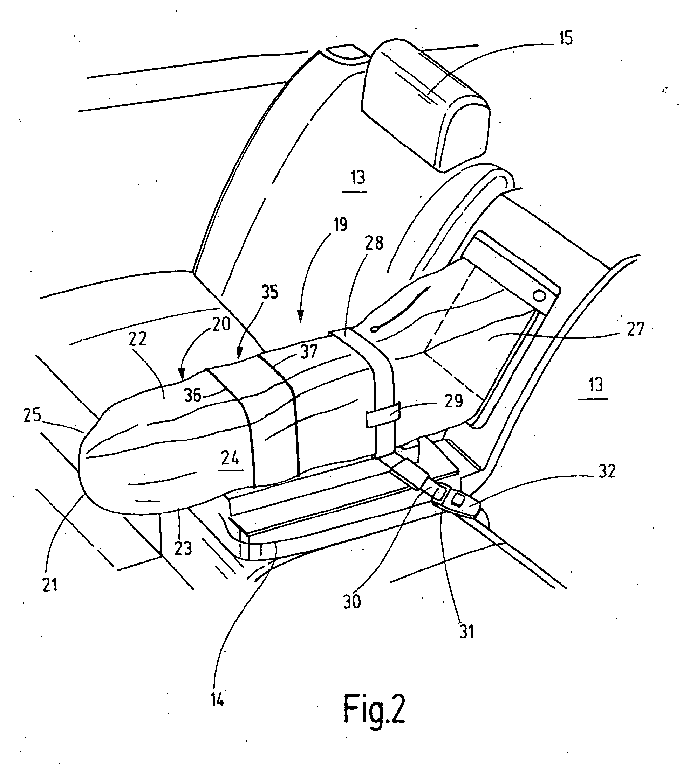

Die Skisackbox 17 ist ein im Wesentlichen quaderförmiger Kasten, mit einem Rahmen oder Zarge, an deren Vorderseite am unteren Ende Klappe 18 anscharniert ist. Eine weitere nicht dargestelle Klappe verschließt die Skisackbox 17 auf der Rückseite in Richtung auf den nicht gezeigten Lade- oder Kofferraum, der sich an die Rücksitzlehne 11 anschließt. Durch Herunterklappen der vorderen Klappe 18 kann ein Skisack 19 in die Fahrgastzelle herausgezogen werden, wir dies Fig. 2 zeigt. Der Skisack 19 besteht aus einer biegeschlaffen Sackhülle 20, die zur Bildung des Sackbodens durch eine Bodennaht 21 verschlossen ist. Das Material ist ein wasserdichtes Gewebe.

Der Skisack 19 ist, wäre er steif, im Querschnitt rechteckig und wird von einer Sackoberseite 22, einer Sackunterseite 23 und zwei Sackflanken 24, 25 begrenzt. An seinem freien Ende geht er in eine prismatische Spitze über, von der eine Kante die Bodennaht 21 bildet. Die Bodennaht 21 verläuft vertikal.

Das von der Bodennaht 21 abliegende Ende der Sackhülle 20 ist innerhalb des rahmenförmigen Grundkörpers verankert. Hierdurch öffnet sich der Skisack 19 mit seiner Einstecköffnung 27 in Richtung auf den Lade- oder Kofferraum 5.

Um ein wildes Herumschleudern des Skisacks 19 mit den darin verstauten (nicht dargestellen) Skiern zu vermeiden, ist ein Gürtel 28 vorgesehen, der durch an der Skisackhülle 20 vernähte Laschen 29 hindurchführt und mit Gurten 30 versehen ist. Die Gurte 30 tragen an ihren freien Enden Einsteckteile 31, die zum Einstecken in Gurtschlösser 32 von Sicherheitsgurten der Rücksitzbank 11 vorgesehen sind.

Die Sackhülle 20 hat gemessen ab dem rahmenförmigen Grundkörper bis hin zu der Bodennaht 21 eine Länge, damit Langskier ohne weiteres verstaut werden können. Wenn Langskier mit ihrer Spitze an dem Sackboden anstoßen, befindet sich deren Skibindung etwa auf der Höhe des Gürtels 28. Durch Festziehen des Gürtels werden die Skier in dem Skisack 19 gesichert.

Wenn anstelle von langen Skiern kurze Ski oder Snowboards untergebracht werden sollen, und zwar so, dass auch hier wieder die Bindung beziehungsweise die Mitte des Snowboards bei dem Gürtel 28 liegt, wäre die Sackhülle 20 zu lang. Der in der Nähe der Bodennaht 21 befindliche Bereich würde lediglich schlaff herumliegen. Um dies zu vermeiden, kann die Sackhülle 20 in der Länge verkürzt werden. Hierzu führt um die Sackhülle im Bereich zwischen der Bodennaht 21 und dem Gürtel 28 ein Reißverschluss 35 in Umfangsrichtung um die Sackhülle 20 herum. Die Längsachse des Skisacks 19 liegt parallel zu der Länge des Skisacks.

Der Reißverschluss 35 besteht aus zwei Reißverschlusshälften 36 und 37, die parallel und im Abstand zueinander jede für sich in Umfangsrichtung um die Sackhülle 20 herumlaufen. Der Abstand, den die beiden Reißverschlusshälften 36 und 37 voneinander haben, entspricht der Länge, um die die Sackhülle 20 bei Bedarf verkürzt werden soll.

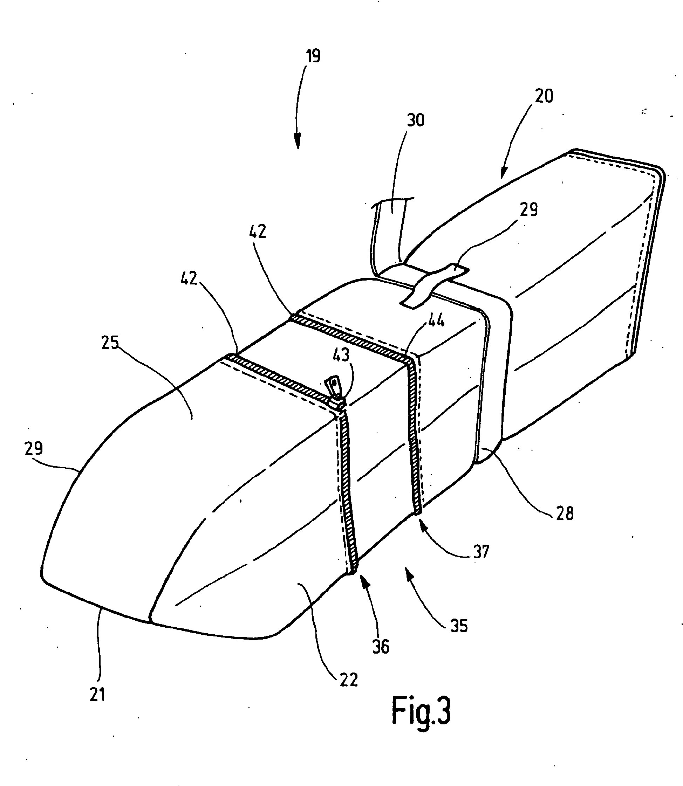

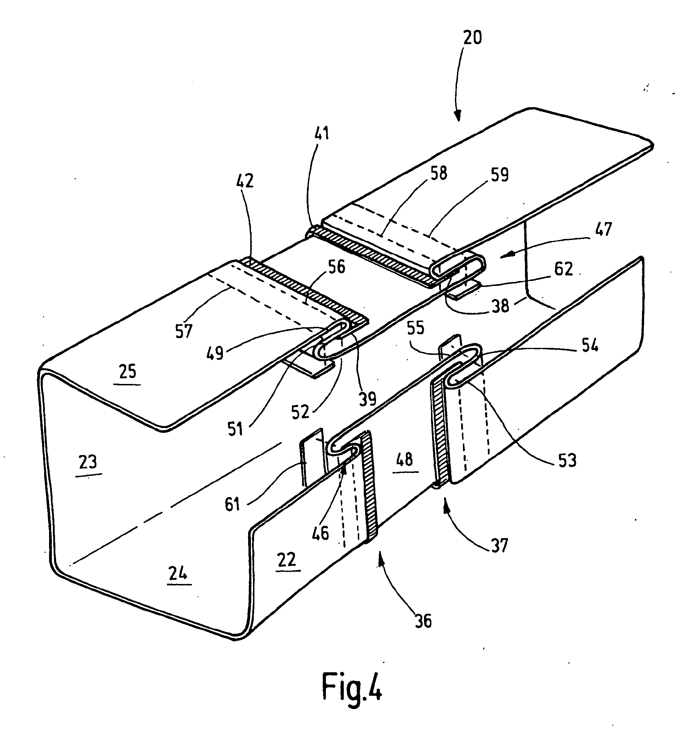

Fig. 3 zeigt in Verbindung mit Fig. 4 die Art der Befestigung des Reißverschlusses 35 an der Sackhülle 20.

Der Reißverschluss 35 ist ein teilbarer Reißverschluss. Er weist in der üblichen Weise zwei Tragbänder 38 und 39 auf, die mit der Sackhülle 20 vernäht sind. Die beiden Tragbänder 38 und 39 tragen aufeinander zu zeigende Verschlussgliederreihen 41 und 42. Auf der verschlussgliederreihe 42 befindet sich dauerhaft ein Schieber 43, der längs der Verschlussgliederreihe 38 bewegbar ist. Fig. 3 zeigt gegenüber dem Schieber 43 ein Einsteckende 44, das in den Schieber 43 einsteckbar ist, wenn diese wie gezeigt an dem Anfang des teilbaren Reißverschlusses 35 steht.

Die Handhabung ist wie folgt: Wenn Kurzskier- oder Snowboards verstaut werden sollen, wird zunächst das Einsteckende 44 wie bei teilbaren Reißverschlüssen üblich, in den Schieber 43 eingesteckt. Sodann wird der Schieber 43 längs der beiden Verschlussgliederreihen 41,42 bezogen auf Fig. 3 nach links, längs dem Umfang der Sackhülle 20 geführt. Dabei stülpt sich der Bereich der Sackhülle 20, der sich zwischen den beiden Reißerschlusshälften 36,37 befindet, nach innen in das Innere der Sackhülle 20 ein. Bei der Verkürzung entsteht eine um die Achse der Sackhülle 20 umlaufende Falte.

Nachdem der Schieber 43 des Reißverschlusses 45 um 360° um die Sackhülle 20 herumgeführt ist, ist der Reißverschluss 35 über die gesamte Länge geschlossen. Damit ist über den gesamten Umfangsbereich eine in Umfangsrichtung liegende Querfalte entstanden, die sich in das Innere der Sackhülle 20 vorwölbt. Die durch das Verkürzen entstandene Querfalte ist somit selbst innerhalb der Sackhülle 20 verstaut.

Der Skisack 19 hat nunmehr eine Länge, bei der er mit der Bodennaht 21 nicht mehr nennenswert über den längsten verstauten Ski übersteht. Ein schlaff herunterhängendes Skisackende wird vermieden.

Bei der zuvor beschriebenen Funktionserläuterung wurde auf die Art der Befestigung der Reißverschlusshälften 36, 37 nicht näher eingegangen. Es wurde davon ausgegangen, dass die Tragbänder 38, 39 flach auf der Außenseite der Sackhülle 20 aufliegend aufgenäht sind. Eine solche Anbringung erfüllt ihren Zweck, ist jedoch ästhetisch nicht besonders ansprechend.

Eine ästhetisch ansprechendere Form ist in Fig. 4 gezeigt. Wir dort zu erkennen ist, ist die Sackhülle 20 im Bereich jeder Reißverschlusshälfte 36, 37 jeweils noch ein mal in eine kurze S-förmig Falte 46, sowie ein kurze Z-förmige Falte 47 gelegt. Zwischen den beiden Falten 46 und 47 entsteht ein nach Innen vorspringender Bereich 48, der etwa dem Bereich entspricht, um den die Sackhülle 20 zu verkürzen ist.

Durch die S-förmig Falte 46 wird die Anordnung in diesem Bereich dreilagig. Sie setzt sich aus einer Lage 49, einer Zwischenlage 51 und einer in den Bereich 48 übergehenden Lage 52 zusammen. Sinngemäß das gleiche gilt für die Z-förmige Falte 47. Sie setzt sich aus einer äußeren Lage 53, einer Zwischenlage 54 und einer inneren Lage 55 zusammen, die wiederum in den Bereich 48 einstückig übergeht.

Die beiden Lagen 49 und 41 sind miteinander und mit dem Tragband 39 durch eine Naht 56 miteinander vernäht. Die Naht 56 befindet sich in der Nähe des Umbugs, wo die Lage 49 in die Zwischenlage 51 übergeht. Damit eine gewünschte Sollfaltung begünstigt wird, sind außerdem noch die drei Lagen 49, 51 und 52 durch eine Naht 57 miteinander verbunden, die sich in der Nähe des Umbugs befindet, an dem die Zwischenlage 51 in die Lage 52 übergeht. Das Tragband 39 liegt zwischen den Lagen 51 und 52.

Eine entsprechende Verbindung mit Hilfe von Nähten 58 und 59 ist bei der Z-förmigen Falte 47 vorgesehen.

Die Naht 56 befindet sich ohnehin zur Gänze auf der Außenseite der Sackhülle 20. Hingegen reicht die Naht 57 bis in das Innere hinein, weshalb sie auf der Innenseite der Sackhülle 20 zusätzlich durch ein aufgeschweißtes Dichtband 61 abgedichtet ist. Ein entsprechendes Dichtband 62 dichtet die Naht 59 ab.

Sämtliche Nähte 56, 57, 58, 59 verlaufen parallel zueinander exakt in Umfangsrichtung, ebenso wie dies die S-förmige Falte 46 und die Z-förmige Falte 47 tun. Die beiden Dichtbänder 61 und 62 laufen ebenfalls in Umfangsrichtung innerhalb der Sackhülle 20. Die Dichtbänder 61 und 62 werden nach dem Anbringen der betreffenden Nähte auf der Innenseite der Sackhülle 20 aufgeklebt beziehungsweise aufgeschweißt, so dass eine wasserdicht stoffschlüssige Verbindung zwischen den Dichtbändern 61, 62 und der Sackhülle 20 entsteht. Ein Austreten von Schmelzwasser durch die Nähte 57 oder 59 wird dadurch wirksam verhindert.

Die Handhabung ist, wie zuvor beschrieben, mit dem wesentlichen Vorteil, dass durch die vorgesehenen Falten 56 und 57 eine Sollfaltstelle vorgegeben wird, die die Handhabung vereinfacht.

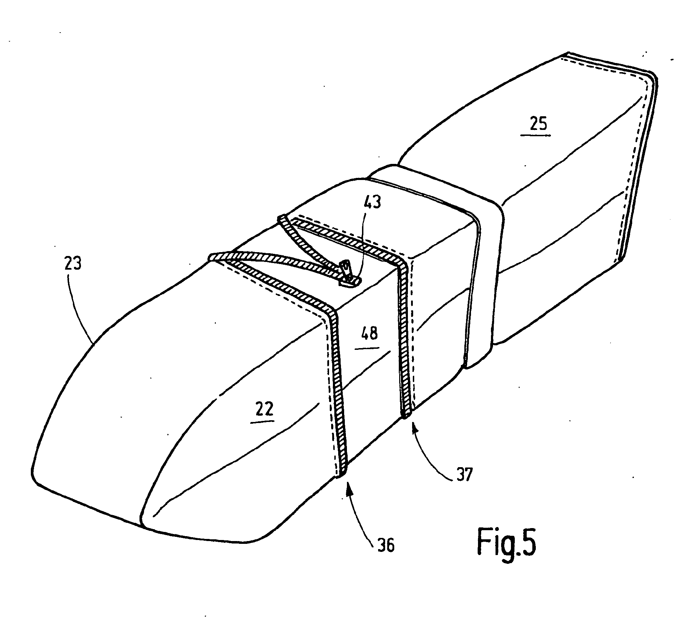

Während bei dem Ausführungsbeispiel nach den Figuren 3 und 4 von einem teilbaren Reißverschluss 35 ausgegangen wurde, zeigt Fig. 5 eine Anordnung mit einem unteilbaren Reißverschluss. Der Reißverschluss beginnt auf dem Verbindungsstück 48 im Bereich zwischen den beiden Reißverschlusshälften 36 und 37. Der Schieber 43 befindet sich am Anfang des Reißverschlusses 35, von wo aus die beiden Reißverschlusshälften 36 und 37 V-förmig in Richtung auf die beiden in Umfangsrichtung liegenden Befestigungsfalten 46 und 47 laufen. Etwa an der Übergangsstelle zwischen der Seitenwand 25 und dem Sackboden 23 entspricht der Abstand der beiden Reißverschlusshälften 36, 37 dem Abstand zwischen den Befestigungsfalten 46 und 47. Er folgt von da aus in gerader Linie diesen Falten. Das Ende des Reißverschlusses 35 liegt, wie Fig. 5 zeigt, wieder im Bereich der Kante, die die Flanke 25 von dem Boden 23 trennt.

Ein solcher Reißverschluss ist leichter zu handhaben. Allein durch Bewegen des Schiebers 44 entsteht die nach Innen ragende Verkürzungsfalte.

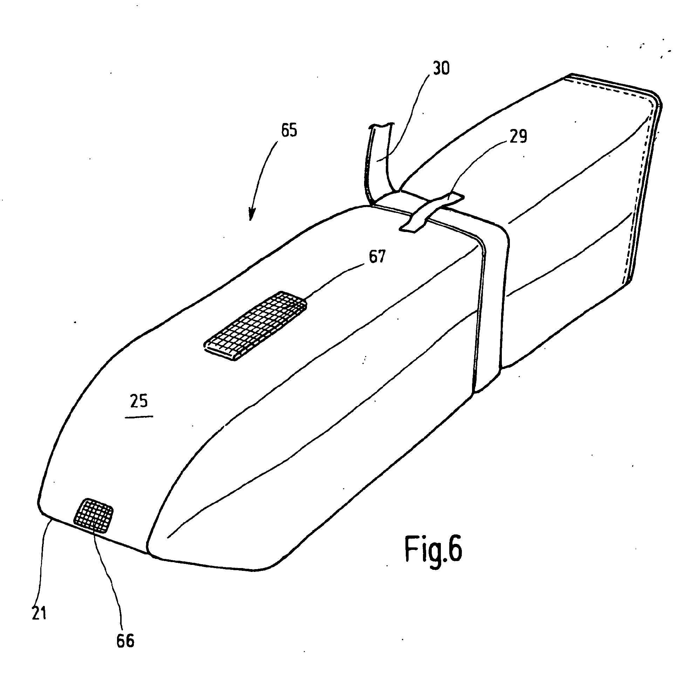

Während bei dem zuvor erläuterten Ausführungsbeispiel zur Verkürzung eine umlaufende Falte verwendet wird, zeigt Fig. 6 eine Anordnung unter Verwendung eines Flächenhaftverschlusses 65 zur Fixierung einer einfachen Querfalte.

Der Flächenhaftverschluss 65 setzt sich aus einem mit Tentakeln besetzten Pad 66 und einem aus einem fließähnlichen Material bestehenden Pad 67 zusammen. Das Tentakelpad 66 befindet sich in der Nähe der Bodennaht 21 und zwar bei der Darstellung auf der Flankenfläche 25. Das andere Pad 67 hat von dem Pad 66 einen Abstand, der halb so groß ist, wie die Hälfte der durch die Verkürzung entstehenden Längenänderung. Wenn eine gewünschte Verkürzung erreicht ist, wird die Sackhülle 20 etwa in der Mitte zwischen den beiden Pads 66 und 67 flach gelegt und bezogen auf die Gebrauchsstellung im Fahrzeug bezüglich der Hochachse ein mal umgeschlagen. Dadurch liegt anschließend die den Sackboden verschließende Bodennaht 21 auf der Flankenfläche 25.

Durch Variationen der Lage des Pads 67 oder dessen Längserstreckung lässt sich auf einfache Weise leicht die gewünschte Längenverkürzung variieren.

Wenn die Verkürzung lediglich durch einfaches Umschlagen erreich werden soll, befindet sich das Pad 66 und das Pad 67 auf der selben Seite der Sackhülle 20.

Anstelle von zwei Pads 66 und 67 kann auch, wie Fig. 6 zeigt, eine Druckknopfanordnung 68 verwendet werden. Die Druckknopfanordnung 68 setzt sich aus einer Druckknopfpfanne 69 und einem Druckknopfkopf 71 zusammen. Die Pfanne 69 ist bei dem gezeigten Ausführungsbeispiel auf der Flankenfläche 25 vorgesehen, während der Druckknopfkopf 71 an einer kurzen Lasche 72 bei der Bodennaht 21 festgenäht oder festgenietet ist. Wie zuvor beschrieben, wird die Sackhülle 20 etwa in der Mitte zwischen der Druckknopfpfanne 69 und dem Druckkopfknopf 71 flach gelegt und einfach zur Seite um 180°umgeschlagen, um die gewünschte Verkürzung zu erreichen.

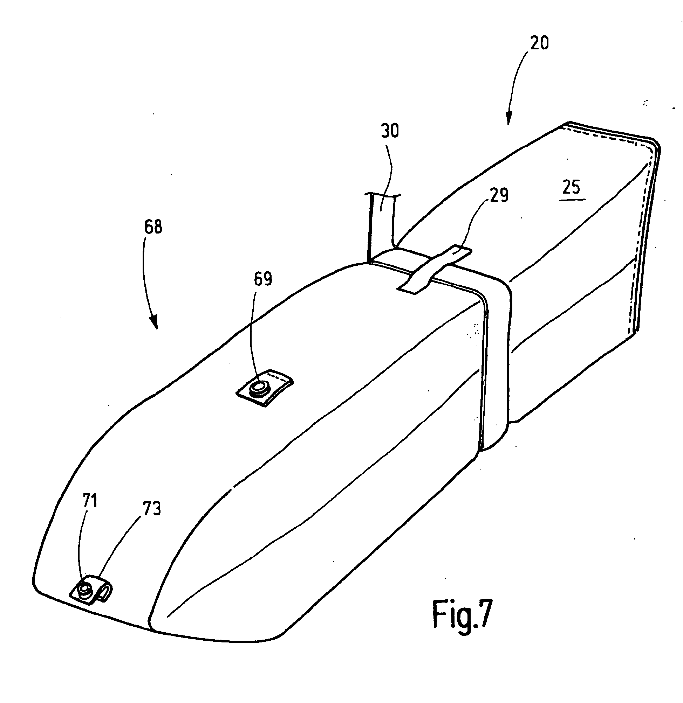

Durch das Einschlagen und Befestigen des Bodenbereichs der Sackhülle 20 entsteht in beiden Fällen eine Konformation wie sie in Fig. 7 gezeigt ist. Es entsteht durch die Falte ein Umbug.

Abgesehen von dem einfachen Einschlagen ist es auch möglich, den Skisack von der Bodennaht 21 her mehrfach umzuschlagen. Es entsteht dann im Bodenbereich der Skisackhülle 20 ein mehrfach rollenartig gefaltetes Gebilde, wobei der entstehende Wickel dann bei Verwendung von Flächenhaftverschlüssen oder Druckknopfverschlüssen jeweils auf einer anderen Flankenfläche liegt.

Schließlich sei noch erwähnt, dass auch eine mehr oder weniger stufenlose Verkürzung des Skisacks möglich ist. Hierzu kann ein Reißverschluss 35 verwendet werden, wie er in Fig. 5 gezeigt ist. Der Reißverschluss liegt mit seinem Anfang auf einer Fläche der Sackhülle, von wo aus der Reißverschluss mit seinen beiden Hälften divergiert. Ab einer bestimmten Stelle laufen die beiden Reißverschlusshälften 36 und 37 gemäß Fig. 5 parallel nebeneinander, jedoch längs einer Schraubenlinie. Mit anderen Worten, nach 360° Umgang um die Sackhülle 20 liegt die eine Reißverschlusshälfte, beispielsweise die Reißverschlusshälfte 37 so neben der Reißverschlusshälfte 36, dass hier die beiden Tragbänder der Reißverschlusshälften einander benachbart sind. Der Anfang liegt nicht mehr zwischen den beiden Verschlußgliederreihen.

Zum Verkürzen eines Skisacks ist die Sackhülle mit Fixiermitteln versehen. Mit Hilfe der Fixiermittel können quer oder in Umfangsrichtung verlaufende Falten in der Sackhülle fixiert werden, um eine entsprechende Längenverkürzung der Sackhülle zu erhalten. Die Fixiermittel können Reißverschlüsse, Flächenhaftverschlüsse oder Druckknopfverschlüsse sein.

## Patentansprüche

1. Skisackanordnung (19) zum Verstauen von Skiern in einem Kraftfahrzeug,
mit einem Anschlussrahmen (17), der in eine Durchladeöffnung (16) in dem Kraftfahrzeug einsetzbar ist,
mit einer an dem Anschlussrahmen (17) befestigten Sackhülle (20), die aus wasserdichtem biegeschlaffem Material besteht und eine Sackwand und einen Sackboden bildet, und
mit Fixiermitteln (35,65,68), die wahlweise zwischen einer Fixierstellung und eine gelösten Stellung hin und her bewegbar sind und die dazu eingerichtet sind, eine in Umfangsrichtung der Sackhülle (20) verlaufende Falte zu fixieren, die dazu dient die effektive Länge des in der Gebrauchsstellung befindlichen Sackhülle (20) zu verkürzen.

2. Skisackanordnung (19) zum Verstauen von Skiern in einem Kraftfahrzeug,
mit einem Anschlussrahmen (17), der in eine Durchladeöffnung (16) in dem Kraftfahrzeug einsetzbar ist,
mit einer an dem Anschlussrahmen (16) befestigten Sackhülle (20), die aus wasserdichtem biegeschlaffem Material besteht und eine Sackwand und einen Sackboden bildet, und
mit Fixiermitteln (35,65,68), die wahlweise zwischen einer Fixierstellung und eine gelösten Stellung hin und her bewegbar sind und die dazu eingerichtet sind, wenigstens eine über die Breite/Höhe der Sackhülle (20) verlaufende Querfalte zu fixieren, an der die Sackhülle (20) von dem Sackboden (21) her umgeschlagen ist um die effektive Länge des in der Gebrauchsstellung befindlichen Sackhülle (20) zu verkürzen.

3. Vorrichtung nach Anspruch 1 oder 2, **dadurch gekennzeichnet, dass** die Sackhülle (20) gewebeverstärkt ist.

4. Vorrichtung nach Anspruch 1 oder 2, **dadurch gekennzeichnet, dass** der Sackboden eine prismatische Gestalt aufweist.

5. Vorrichtung nach Anspruch 1, **dadurch gekennzeichnet, dass** die Fixiermittel einen Reißverschluss (35), vorzugsweise einen unteilbaren Reißverschluss umfassen.

6. Vorrichtung nach Anspruch 1 oder 2, **dadurch gekennzeichnet, dass** die Sackhülle (20) beidseits der der Verkürzung dienenden Falte Sollfaltstellen (46,47) aufweist, die in Umfangsrichtung der Sackhülle (20) verlaufen.

7. Vorrichtung nach Anspruch 1 oder 2, **dadurch gekennzeichnet, dass** die Sollfaltstelle (46,47) von eine zickzackförmigen in Umfangsrichtung der Sackhülle (20) laufenden Falte gebildet ist, die durch Nähte (56,57,58,59) gesichert ist.

8. Vorrichtung nach den Ansprüchen 1 und 7, **dadurch gekennzeichnet, dass** in die Falte (46,47) das Tragband (38,39) eines Reißverschlusses (35) eingelegt ist.

9. Vorrichtung nach den Ansprüchen 5 und 6, **dadurch gekennzeichnet, dass** ein Ende des unteilbaren Reißverschlusses (35) auf der Sackhülle (20) befestigt ist und von dort aus die Tragbänder (38,39) in Richtung auf die Sollbiegestellen (46,47) verlaufen.

10. Vorrichtung nach Anspruch 5, **dadurch gekennzeichnet, dass** die Verschlussgliederreihen (41,42) des Reißverschluss (35) auf der Außenseite der Sackhülle (20) liegen.

11. Vorrichtung nach Anspruch 1 oder 2, **dadurch gekennzeichnet, dass** die Nähte (56,57,58,59) durch aufgeklebte oder aufgeschweißte Dichtbänder (61,62) wasserdicht abgedichtet sind.

12. Vorrichtung nach Anspruch 5, **dadurch gekennzeichnet, dass** der Reißverschluss (35) teilbar ist und jede Reißverschlusshälfte (36,37) ausschließlich im Bereich der zugeordneten Sollbiegestellen (46,47) verläuft.

13. Vorrichtung nach Anspruch 2, **dadurch gekennzeichnet, dass** das Fixiermittel einen Flächenhaftverschluss (65) aufweist.

14. Vorrichtung nach Anspruch 13, **dadurch gekennzeichnet, dass** der Flächenhaftverschluss von einem Klettverschluss gebildet wird.

15. Vorrichtung nach Anspruch 14, **dadurch gekennzeichnet, dass** ein Teil (66,67) des Flächenhaftverschlusses (65) im Bereich der Spitze (21) des Sackbodens und das korrespondierende Teil (66,67) in einem entsprechenden Stück in Richtung auf den Anschlussrahmen (17) an der Außenseite der Sackhülle (20) befestigt ist.

16. Vorrichtung nach Anspruch 14, **dadurch gekennzeichnet, dass** ein Teil (66,67) des Flächenhaftverschlusses (65) in einem Abstand entsprechend der Hälfte des durch Querfalten eingeschlagenen Bereiches angeordnet ist und das der andere Teil (66,67) auf der Sackhülle (20) in einem Abstand von dem ersten Teil (66,67) angeordnet ist, der der Länge des umgefalteten Bereichs gemessen in Richtung parallel zur Längsachse der Sackhülle (20) entspricht.

17. Vorrichtung nach Anspruch 14, **dadurch gekennzeichnet, dass** der eine Teil (66,67) auf der in der Gebrauchsstellung einen Außenseite der Sackhülle (20) und der andere Teil (66,67) auf der in der Gebrauchsstellung anderen Außenseite der Sackhülle angeordnet ist.

18. Vorrichtung nach Anspruch 2, **dadurch gekennzeichnet, dass** die Fixiermittel einen Druckknopf (68) aufweisen.

19. Vorrichtung nach Anspruch 18, **dadurch gekennzeichnet, dass** ein Teil (69,71) des Flächenhaftverschlusses (65) im Bereich der Spitze (21) des Sackbodens und das korrespondierende Teil (69,71) in einem entsprechenden Stück in Richtung auf den Anschlussrahmen (17) an der Außenseite der Sackhülle (20) befestigt ist.

20. Vorrichtung nach Anspruch 18, **dadurch gekennzeichnet, dass** ein Teil (69,71) des Flächenhaftverschlusses (65) in einem Abstand entsprechend der Hälfte des durch Querfalten eingeschlagenen Bereiches angeordnet ist und das der andere Teil (69,71) auf der Sackhülle (20) in einem Abstand von dem ersten Teil (69,71) angeordnet ist, der der Länge des umgefalteten Bereichs gemessen in Richtung parallel zur Längsachse der Sackhülle (20) entspricht.

21. Vorrichtung nach Anspruch 18, **dadurch gekennzeichnet, dass** der eine Teil (69,71) auf der in der Gebrauchsstellung einen Außenseite der Sackhülle (20) und der andere Teil (69,71) auf der in der Gebrauchsstellung anderen Außenseite der Sackhülle angeordnet ist.

## Claims

1. Ski bag arrangement (19) for stowing skis in a motor vehicle,
with a connection frame (17), which can be inserted into a through loading opening (16) in the motor vehicle,
with a bag casing (20), which is fastened to the connection frame (17) and is made from watertight supple material and forms a bag wall and a bag base, and
with securing elements (35, 65, 68), which are selectively movable back and forth between a securing position and a released position and which are arranged to secure a fold running in the circumferential direction of the bag casing (20), which serves to shorten the effective length of the bag casing (20) when located in the position of use.

2. Ski bag arrangement (19) for stowing skis in a motor vehicle,
with a connection frame (17), which can be inserted into a through loading opening (16) in the motor vehicle,
with a bag casing (20), which is fastened to the connection frame (17) and is made from watertight supple material and forms a bag wall and a bag base, and
with securing elements (35, 65, 68), which are selectively movable back and forth between a securing position and a released position and which are arranged to secure at least one transverse fold running over the width/height of the bag casing (20), at which the bag casing (20) is folded over from the bag base (21) to shorten the effective length of the bag casing (20) when located in the position of use.

3. Device according to claim 1 or 2, **characterised in that** the bag casing (20) is fabric-reinforced.

4. Device according to claim 1 or 2, **characterised in that** the bag base has a prismatic structure.

5. Device according to claim 1, **characterised in that** the securing elements comprise a zip fastener (35), preferably an inseparable zip fastener.

6. Device according to claim 1 or 2, **characterised in that** on both sides of the fold for shortening its length, the bag casing (20) has predetermined folding points (46, 47), which run in the circumferential direction of the bag casing (20).

7. Device according to claim 1 or 2, **characterised in that** the predetermined folding point (46, 47) is formed by a zigzag fold running in the circumferential direction of the bag casing (20) secured by seams (56, 57, 58, 59).

8. Device according to claims 1 and 7, **characterised in that** the support tape (38, 39) of a zip fastener (35) is inserted into the fold (46, 47).

9. Device according to claims 5 and 6, **characterised in that** an end of the inseparable zip fastener (35) is fastened to the bag casing (20) and from there the support tapes (38, 39) extend towards the predetermined folding points (46, 47).

10. Device according to claim 5, **characterised in that** the rows of fastener elements (41, 42) of the zip fastener (35) lie on the outer surface of the bag casing (20).

11. Device according to claim 1 or 2, **characterised in that** the seams (56, 57, 58, 59) are sealed to be watertight by glued or welded sealing tapes (61, 62).

12. Device according to claim 5, **characterised in that** the zip fastener (35) is separable and each zip fastener half (36, 37) runs solely in the region of the associated predetermined folding points (46, 47).

13. Device according to claim 2, **characterised in that** the securing element has a surface bonding fastener (65).

14. Device according to claim 13, **characterised in that** the surface bonding fastener is formed by a Velcro fastener.

15. Device according to claim 14, **characterised in that** one part (66, 67) of the surface bonding fastener (65) is fastened in the region of the point (21) of the bag base and the corresponding part (66, 67) is fastened on the outer surface of the bag casing (20) in a corresponding piece directed towards the connection frame (17).

16. Device according to claim 14, **characterised in that** one part (66, 67) of the surface bonding fastener (65) is arranged at a distance corresponding to half the region folded inwards by the transverse folds and the other part (66, 67) is arranged on the bag casing (20) at a distance from the first part (66, 67) corresponding to the length of the folded over region, measured in a direction parallel to the longitudinal axis of the bag casing (20).

17. Device according to claim 14, **characterised in that** one part (66, 67) is arranged on the one outer surface of the bag casing (20) in the position of use and the other part (66, 67) is arranged on the other outer surface of the bag casing in the position of use.

18. Device according to claim 2, **characterised in that** the securing elements have a pushbutton (68).

19. Device according to claim 18, **characterised in that** one part (69, 71) of the surface bonding fastener (65) is fastened in the region of the point (21) of the bag base and the corresponding part (69, 71) is fastened to the outer surface of the bag casing (20) in a corresponding piece directed towards the connection frame (17).

20. Device according to claim 18, **characterised in that** one part (69, 71) of the surface bonding fastener (65) is arranged at a distance corresponding to half the region folded inwards by the transverse folds and the other part (69, 71) is arranged on the bag casing (20) at a distance from the first part (69, 71) corresponding to the length of the folded over region, measured in a direction parallel to the longitudinal axis of the bag casing (20).

21. Device according to claim 18, **characterised in that** one part (69, 71) is arranged on the one outer surface of the bag casing (20) in the position of use and the other part (69, 71) is arranged on the other outer surface of the bag casing in the position of use.

## Revendications

1. Agencement de sac à skis (19) destiné à ranger des skis dans un véhicule automobile,
comprenant un châssis de raccordement (17) qui peut être monté dans une ouverture de passage (16) prévue dans le véhicule,
comprenant une housse formant sac (20) qui est fixée au châssis de raccordement (17), est constituée d'une matière étanche à l'eau, souple en flexion, et forme une paroi de sac et un fond de sac,
comprenant des moyens de fixation (35, 65, 68) qui peuvent être déplacés au choix entre une position de fixation et une position de libération et qui sont conçus pour fixer un pli qui s'étend dans la direction périphérique de la housse (20) et sert à réduire la longueur effective de la housse (20), lorsque celle-ci est en position d'utilisation.

2. Agencement de sac à skis (19) destiné à ranger des skis dans un véhicule automobile,
comprenant un châssis de raccordement (17) qui peut être monté dans une ouverture de passage (16) prévue dans le véhicule,
comprenant une housse (20) qui est fixée au châssis de raccordement (17), est constituée d'une matière étanche à l'eau, souple en flexion, et forme une paroi de sac et un fond de sac,
comprenant des moyens de fixation (35, 65, 68) qui peuvent être déplacés au choix entre une position de fixation et une position de libération et qui sont conçus pour fixer au moins un pli transversal qui s'étend sur la largeur/hauteur de la housse (20) et au niveau duquel la housse (20) est rabattue à partir du fond de sac (21), afin de réduire la longueur effective de la housse (20), lorsque celle-ci est en position d'utilisation.

3. Dispositif selon la revendication 1 ou 2, **caractérisé par le fait que** la housse (20) est réalisée dans un tissu renforcé.

4. Dispositif selon la revendication 1 ou 2, **caractérisé par le fait que** le fond du sac présente la forme d'un prisme.

5. Dispositif selon la revendication 1, **caractérisé par le fait que** les moyens de fixation comprennent une fermeture à glissière (35), de préférence une fermeture à glissière non séparable.

6. Dispositif selon la revendication 1 ou 2, **caractérisé par le fait que** la housse (20) présente, de part et d'autre du pli prévu pour la raccourcir, des zones destinées au pliage (46, 47) qui s'étendent dans la direction périphérique de la housse (20).

7. Dispositif selon la revendication 1 ou 2, **caractérisé par le fait que** la zone destinée au pliage (46, 47) est constituée d'un pli en forme de zigzag, qui s'étend dans la direction périphérique de la housse (20) et est fixé par des coutures (56, 57, 58, 59).

8. Dispositif selon les revendications 1 et 7, **caractérisé par le fait que** le ruban de support (38, 39) d'une fermeture à glissière (35) est inséré dans le pli (46, 47).

9. Dispositif selon les revendications 5 et 6, **caractérisé par le fait qu'**une extrémité de la fermeture à glissière (35) non séparable est fixée à la housse (20) et que les rubans de support (38, 39) s'étendent à partir de cet endroit en direction des zones destinées au pliage (46, 47).

10. Dispositif selon la revendication 5, **caractérisé par le fait que** les rangées des éléments de fermeture (41, 42) de la fermeture à glissière (35) se trouvent sur la face extérieure de la housse (20).

11. Dispositif selon la revendication 1 ou 2, **caractérisé par le fait que** les coutures (56, 57, 58, 59) sont rendues étanches à l'eau par des bandes d'étanchéité (61, 62) appliquées par collage ou soudage.

12. Dispositif selon la revendication 5, **caractérisé par le fait que** la fermeture à glissière (35) est séparable et que chaque moitié de fermeture (36, 37) s'étend uniquement dans la région des zones destinées au pliage (46, 47) associées.

13. Dispositif selon la revendication 2, **caractérisé par le fait que** le moyen de fixation présente une fermeture par accrochage de surfaces (65).

14. Dispositif selon la revendication 13, **caractérisé par le fait que** la fermeture par accrochage de surfaces est formée d'une fermeture auto-agrippante.

15. Dispositif selon la revendication 14, **caractérisé par le fait qu'**une partie (66, 67) de la fermeture par accrochage de surfaces (65) est fixée dans la région de la pointe (21) du fond de sac, et la partie (66, 67) associée est fixée sur la face extérieure de la housse (20), à une distance correspondante en direction du châssis de raccordement (17).

16. Dispositif selon la revendication 14, **caractérisé par le fait qu'**une partie (66, 67) de la fermeture par accrochage de surfaces (65) est disposée à une distance qui correspond à la moitié de la zone rabattue autour de plis transversaux, et que l'autre partie (66, 67) est disposée sur la housse (20), à une distance de la première partie (66, 67) qui correspond à la longueur de la zone repliée, mesurée parallèlement à l'axe longitudinal de la housse (20).

17. Dispositif selon la revendication 14, **caractérisé par le fait qu'**une partie (66, 67) est disposée sur l'une des faces de la housse (20) qui est située à l'extérieur lorsque la housse est en position d'utilisation, et l'autre partie (66, 67) est disposée sur l'autre face située à l'extérieur lorsque la housse est en position d'utilisation.

18. Dispositif selon la revendication 2, **caractérisé par le fait que** les moyens de fixation présentent un bouton-pression (68).

19. Dispositif selon la revendication 18, **caractérisé par le fait qu'**une partie (69, 71) de la fermeture par accrochage de surfaces (65) est fixée dans la région de la pointe (21) du fond de sac, et la partie (69, 71) associée est fixée sur la face extérieure de la housse (20), à une distance correspondante en direction du châssis de raccordement (17).

20. Dispositif selon la revendication 18, **caractérisé par le fait qu'**une partie (69, 71) de la fermeture par accrochage de surfaces (65) est disposée à une distance qui correspond à la moitié de la zone rabattue autour de plis transversaux, et que l'autre partie (69, 71) est disposée sur la housse (20), à une distance de la première partie (69, 71) qui correspond à la longueur de la zone repliée, mesurée parallèlement à l'axe longitudinal de la housse (20).

21. Dispositif selon la revendication 18, **caractérisé par le fait qu'**une partie (69, 71) est disposée sur l'une des faces de la housse (20) qui est située à l'extérieur lorsque la housse est en position d'utilisation, et l'autre partie (69, 71) est disposée sur l'autre face située à l'extérieur lorsque la housse est en position d'utilisation.
